# EUROPÄISCHE PATENTANMELDUNG

(11) **EP 1 093 984 A2**
(43) Veröffentlichungstag der Anmeldung: **25.04.2001**
(21) Anmeldenummer: 00122744.6
(22) Anmeldetag: 19.10.2000
(51) Int. Cl.: B60S 1/38

(54) **Wischblatt für ein Fahrzeug und Verfahren zum Verbinden einer Schiene und eines Wischkörpers miteinander**

(30) Priorität: 21.10.1999 DE 19950741
(71) Anmelder: ROBERT BOSCH GMBH, 70442 Stuttgart (DE)
(72) Erfinder: De Keyser, Ernest, 3720 Scherpenheuvel (BE)

(57) **Zusammenfassung**

Es wird ein Wischblatt für eine Scheibe eines Fahrzeugs vorgeschlagen, wobei das Wischblatt ein Gestell aufweist, an dem ein auf der Scheibe anlegbares Wischelement gehalten ist, wobei das Wischelement eine Schiene und mindestens einen aus einem elastischen Material bestehenden Wischkörper umfasst. Das Wischblatt (1) zeichnet sich dadurch aus, dass die Schiene (15) in den Wischkörper (17) integriert ist. Es wird ferner ein Verfahren zum Verbinden einer Schiene und mindestens eines Wischkörpers miteinander zu einem Wischelement für ein Wischblatt vorgeschlagen, das sich dadurch auszeichnet, dass die Festigkeitseigenschaften des Wischkörpermaterials durch Erwärmen soweit verringert werden, dass die Schiene in den Wischkörper integrierbar ist.

## Beschreibung

### Stand der Technik

Die Erfindung betrifft ein Wischblatt für eine Scheibe eines Fahrzeugs gemäß Oberbegriff des Anspruchs 1 und ein Verfahren zum Verbinden einer Schiene und mindestens eines Wischkörpers miteinander zu einem Wischelement für ein Wischblatt.

Wischblätter der hier angesprochenen Art sind bekannt. Sie weisen ein Gestell auf, an dem ein Wischelement angebracht ist, das an eine Scheibe eines Fahrzeugs anlegbar ist. Das Wischelement weist eine Schiene und einen aus einem elastischen Material bestehenden Wischkörper auf, wobei der Wischkörper eine in Richtung seiner Längsmittelachse verlaufende Aufnahme aufweist, in die die aus einem nicht-rostenden Stahl hergestellte Schiene einschiebbar ist. Das Wischelement wird im Bereich der Schiene von am Gestell vorgesehenen Befestigungsmitteln, wie zum Beispiel Krallen, gehalten und somit auch der Wischkörper. Nachteilig bei dem bekannten Wischblatt ist die aufwendige Herstellung des Wischelements, dessen Schiene und Wischkörper in separaten Arbeitsgängen hergestellt und anschließend zusammengefügt werden müssen. Ferner ist auch das hochwertige Material der Schiene sehr teuer.

### Vorteile der Erfindung

Das erfindungsgemäße Wischblatt mit den kennzeichnenden Merkmalen des Anspruchs 1 hat demgegenüber den Vorteil, dass das Verbinden der Schiene mit dem Wischkörper in einem separaten Montagvorgangs während des Zusammenfügens der Teile des Wischblatts entfällt. Die Schiene und der Wischkörper sind vorzugsweise zu einer unlösbaren Einheit zusammengefügt, wobei die Integration der Schiene in den Wischkörper beispielsweise bei der Herstellung des Wischkörpers erfolgen kann. Die Schiene ist zumindest teilweise in den Wischkörper eingebettet und von dessen Material umgeben, wodurch die sie am beziehungsweise im Wischkörper gehalten und befestigt ist. Dadurch kann auch eine einfache Form der Schiene realisiert werden.

Nach einer Weiterbildung des Wischblatts ist vorgesehen, dass die Schiene vollständig vom Wischkörper umschlossen ist. Der Wischkörper dient also gleichzeitig als Aufnahme und als Ummantelung für die Schiene, so dass die Schiene gegen Witterungseinflüsse geschützt ist. Die Schiene kann daher aus einem kostengünstigen Material, zum Beispiel aus Stahl, vorzugsweise aus Federstahl, auch aus rostenden Metall, hergestellt werden. Die Länge der Schiene ist bei diesem Ausführungsbeispiel kürzer als die Länge des Wischkörpers. Ferner ist hier der Querschnitt der Schiene kleiner, vorzugsweise deutlich kleiner, als der die Schiene aufnehmende Bereich des Wischkörpers.

In bevorzugter Ausführungsform besteht der Wischkörper aus Gummi, das vorzugsweise in einem Extrudierverfahren zu einem Wischkörper geformt wird. Von dem beim Extrudieren gebildeten, profilierten Strang aus Gummi kann der Wischkörper in entsprechender Länge abgetrennt werden.

Bei einem vorteilhaften Ausführungsbeispiel des Wischblatts ist vorgesehen, dass die Schiene durch Ablängen von Bandmaterial herstellbar ist, so dass weitere Bearbeitungsschritte zur Ausformung der Schiene entfallen können. Bei einer anderen Ausführungsvariante wird die Schiene durch Stanzen hergestellt, was die Ausformung der Schiene in einem Arbeitsgang ermöglicht.

Weitere vorteilhafte Ausführungsformen des Wischblatts ergeben sich aus den übrigen Unteransprüchen.

Ein weiteres Ziel der Erfindung besteht in einem Verfahren zum Verbinden einer Schiene und mindestens eines Wischkörpers miteinander zu einem Wischelement für ein Wischblatt mit den Merkmalen des Anspruchs 9. Gemäß den kennzeichnenden Merkmalen des Anspruchs 9 ist vorgesehen, dass die Festigkeitseigenschaften des Wischkörpermaterials durch Erwärmen soweit verringert werden, dass die Schiene darin integrierbar ist. Durch das Erwärmen wird das Wischkörpermaterial soweit erweicht, bis die Schiene beispielsweise darin soweit eingedrückt werden kann, dass ein Hintergriff zwischen dem Wischkörper und der Schiene gebildet wird, der auch im abgekühlten Zustand des Wischkörpermaterials bestehen bleibt, wodurch die Schiene am Wischkörper gehalten ist. Selbstverständlich ist es auch möglich, die Schiene in eine entsprechende Aufnahme einzulegen, in die das Wischkörpermaterial eingebracht, zum Beispiel eingepresst oder eingegossen, wird. Unabhängig davon, in welcher Weise die Schiene in das durch Erwärmen in einen weichen Zustand überführte Wischkörpermaterial eingebracht wird, ist die Schiene nach dem Verbinden mit dem Wischkörper von dessen Material zumindest teilweise, vorzugsweise größtenteils, insbesondere vollständig umgeben, wodurch die Schiene vor Alterung geschützt wird. Es kann also kostengünstiges Material für die Schiene verwendet werden. Vorteilhaft ist ferner, dass die Schiene und der Wischkörper zu einer Einheit, nämlich dem Wischelement, verbunden sind, die einfach mit dem Gestell verbunden werden kann.

Bei einer vorteilhaften Ausführungsform des Verfahrens wird die Schiene während der Herstellung des Wischkörpers in diesen eingebracht. Dadurch ist die Herstellung des Wischelements mit wenigen Arbeitsschritten möglich, was die Kosten des Wischblatts reduziert.

Bei einer besonders bevorzugten Ausführungsform des Verfahrens wird der Wischkörper durch Extrudieren hergestellt. Dabei wird die Schiene durch eine formgebende Extrudierdüse geführt, durch die auch das erwärmte Wischkörpermaterial hindurchgedrückt wird. Das Wischkörpermaterial und die Schiene werden also gleichzeitig durch die Düse transportiert beziehungsweise gepresst, so dass bei der Ausformung des Wischkörpers gleichzeitig die Schiene durch das Wischkörpermaterial ummantelt beziehungsweise vom Wischkörper aufgenommen wird. Nachdem die Schiene die Extrudierdüse passiert hat, muss lediglich der entstandene Wischkörperstrang auf die gewünschte Länge geschnitten werden. Bei einer anderen Ausführungsform, bei der die Schiene vollständig vom Wischkörpermaterial umgeben ist, muss die Schiene bereits auf ihre Länge abgeschnitten sein, bevor sie vollständig durch die Extrudierdüse hindurchgeführt worden ist.

Weitere vorteilhafte Ausführungsformen des Verfahrens ergeben sich aus den übrigen Unteransprüchen.

### Zeichnung

Im folgenden wird die Erfindung anhand der Zeichnung näher erläutert. Dabei zeigen:
- Figur 1: eine schematische Seitenansicht eines Ausführungsbeispiels eines Wischblatts;
- Figur 2: einen Längsschnitt durch ein Ausführungsbeispiel eines Wischelements;
- Figur 3: einen Querschnitt durch das Wischelement gemäß Figur 2 entlang einer Schnittlinie A-A;
- Figur 4: eine Draufsicht auf ein Ausführungsbeispiel einer Schiene eines Wischelements;
- Figur 5: eine Draufsicht auf eine aus dem Stand der Technik bekannte Schiene eines Wischelements und
- Figur 6: eine schematische Darstellung eines Herstellungsvorganges eines Ausführungsbeispiels des Wischelements.

### Beschreibung der Ausführungsbeispiele

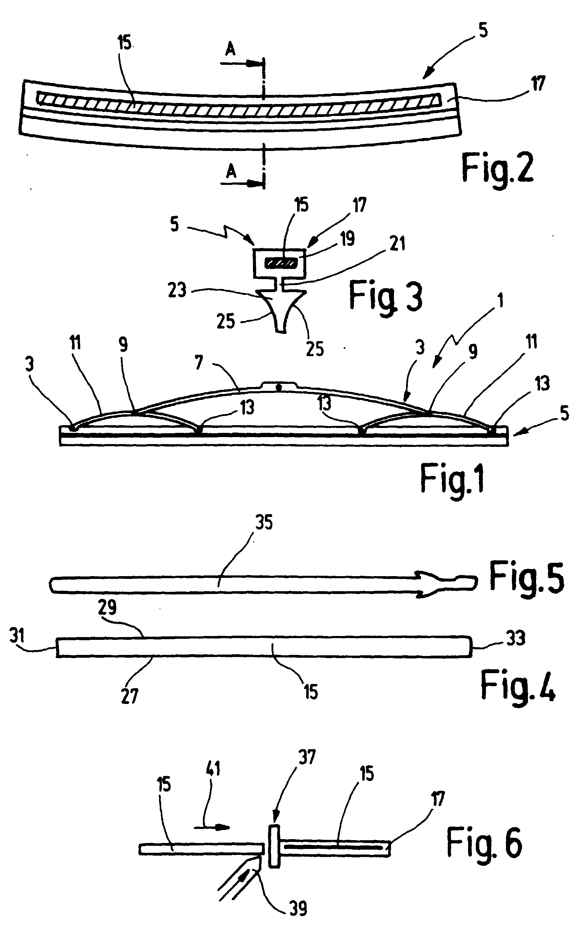

Figur 1 zeigt eine Seitenansicht eines Ausführungsbeispiels eines Wischblatts 1 für eine nicht dargestellte Scheibe eines Fahrzeugs, zum Beispiel eines Kraftfahrzeugs. Das Wischblatt 1 weist ein mehrgliedriges Gestell 3 auf, an welchem ein auf der Scheibe anlegbares Wischelement 5 gehalten ist. Das Gestell 3 umfasst einen übergeordneten Bügel 7, an dessen beiden Enden 9 jeweils ein untergeordneter Bügel 11 befestigt ist. Jeder der beiden untergeordneten Bügel 11 hält an seinen beiden Enden mit Hilfe krallenartiger Fortsätze 13 das Wischelement 5 des Wischblatts 1. Die krallenartigen Fortsätze 13 sind grundsätzlich bekannt und werden daher hier nicht näher beschrieben.

Figur 2 zeigt einen Längsschnitt durch das in Figur 1 dargestellte Wischelement 5, das eine beispielsweise aus Federstahl bestehende Schiene 15 und einen aus einem elastischen Material bestehenden Wischkörper 17 umfasst. Der Wischkörper 17 kann beispielsweise aus Gummi hergestellt werden. Der Wischkörper 17 ist hier einstückig ausgebildet.

Wie aus Figur 2 ersichtlich, ist die Schiene 15, deren Länge kleiner ist als die des Wischkörpers 17, vollständig in den Wischkörper 17 integriert. Das heißt, die Schiene 15 ist vollständig vom Material des Wischkörpers eingeschlossen. Aufgrund dieser Ausgestaltung ist die Schiene 15 der Witterung nicht ausgesetzt, so dass sie ohne weiteres auch aus einem rostenden Metall hergestellt werden kann.

Figur 3 zeigt einen Querschnitt durch das Wischelement 5 gemäß Figur 2 entlang der Schnittlinie A-A. Die Schiene 15 , die einen rechteckförmigen Querschnitt aufweist, ist in der Mitte eines im Querschnitt ebenfalls rechteckförmigen Aufnahmeabschnitts 19 des Wischkörpers 17 angeordnet. Der Aufnahmeabschnitt 19 ist über einen stegförmigen Abschnitt 21 mit einer spitz zulaufenden Wischlippe 23 des Wischkörpers 17 verbunden. Die Wischlippe 23 weist einen im wesentlichen dreieckförmigen Querschnitt auf. Da die Breite des Abschnitts 21 nur sehr klein ist, ist die Wischlippe 23 aufgrund der elastischen Eigenschaften des Wischkörpermaterials gegenüber dem Aufnahmeabschnitt 19 schwenkbeweglich gelagert, so dass sich die Wischlippe 23 während eines Wischvorganges mit ihrer jeweiligen Seitenfläche 25 entsprechend an die Scheibe anlegen kann.

Figur 4 zeigt eine Draufsicht auf die anhand der Figuren 1 bis 3 beschriebene Schiene 15, deren Seitenwände 27 und 29 und Stirnwände 31 und 33 keinerlei Ausformungen, beispielsweise Einschnitte oder dergleichen, aufweisen. Die Schiene 15 ist daher in einfacher Weise herstellbar, beispielsweise durch Herausstanzen aus einer Platte. Es ist aber auch möglich, die Schiene durch Ablängen von Bandmaterial herzustellen.

Figur 5 zeigt eine Draufsicht auf eine Schiene 35 eines bekannten, eingangs beschriebenen Wischblatts, das hier nicht näher dargestellt ist. Die Schiene 35 weist an ihrem einen Ende mehrere Einschnitte auf, wodurch eine Hakenform gebildet ist, in die einer der krallenförmigen Fortsätze am Gestell eingreift. Dadurch wird eine Relativverschiebung der Schiene 35 gegenüber dem Wischkörper, der eine Aufnahme für die Schiene 35 aufweist, vermieden. Es ist ersichtlich, dass die bekannte Schiene 35 aufwendiger in ihrer Herstellung ist, als die Schiene 15.

Der Wischkörper 17 wird bei einem besonders vorteilhaften Ausführungsbeispiel durch Extrudieren hergestellt, das heißt, das Wischkörpermaterial wird soweit erwärmt, bis es in einem weichen Zustand vorliegt und wird dann durch eine Extrudierdüse 37 gepresst, wie sie beispielsweise in Figur 6 angedeutet ist. Die Kontur der Düsenöffnung entspricht der Außenkontur des Wischkörpers 17. Die Extrudierdüse 37 dient also der Formgebung des Wischkörpers 17. Um den Wischkörper 17 mit der Schiene 15 derart zu verbinden, dass die Schiene 15 in den Wischkörper 17 integriert und von dessen Material umgeben ist, sind verschiedene Verfahren möglich.

In Figur 6 ist ein Verfahren zum Verbinden der Schiene 15 mit dem Wischkörper 17 des Wischelements 5 stark schematisiert dargestellt, wobei der Wischkörper 17 durch Extrudieren hergestellt wird. Der Extrudierdüse 37 ist eine Spritzdüse 39 für das Wischkörpermaterial zugeordnet, die das erwärmte, sich im weichen Zustand befindliche Wischkörpermaterial in die Extrudierdüse 37 einbringt. Gleichzeitig wird die Schiene 15, wie mit einem Pfeil 41 angedeutet, ebenfalls in die Extrudierdüse 37 eingeführt. Das Verbinden der Schiene 15 und des Wischkörpers 17 erfolgt also bei der Herstellung des Wischkörpers 17, so dass das Wischelement 5 mit wenigen Arbeitsschritten fertiggestellt ist. Bei dem in Figur 6 dargestellten Ausführungsbeispiel, bei dem die Schiene 15 vollständig von dem Wischkörpermaterial umgeben ist, bei dem also die Länge der Schiene 15 kleiner ist als die Länge des Wischkörpers 17, muss die Schiene 15 bereits auf ihr Endlängenmaß abgeschnitten sein, bevor sie vollständig durch die Extrudierdüse 37 geführt ist.

Bei einem anderen, in den Figuren nicht dargestellten Ausführungsbeispiel ist vorgesehen, dass die Schiene 15 durch Ablängen von Bandmaterial hergestellt wird, wobei das Ablängen bei beziehungsweise während des Einführens des Bandmaterials in die Extrudierdüse 37 stattfindet.

Allen Ausführungsbeispielen ist gemeinsam, dass das Wischelement 5 in einfacher Weise mit vorzugsweise wenigen Arbeitsschritten herstellbar ist. Aufgrund der Einbettung der Schiene 15 in den Wischkörper 17 kann für die Schiene 15 ohne weiteres auch kostengünstiges Material verwendet werden, das beispielsweise rosten kann, da die Schiene 15 durch den Wischkörper 17 geschützt ist. Überdies kann der Zusammenbau des Wischblatts vereinfacht werden.

## Patentansprüche

1. Wischblatt für eine Scheibe eines Fahrzeugs, wobei das Wischblatt ein Gestell aufweist, an dem ein auf der Scheibe anlegbares Wischelement gehalten ist, wobei das Wischelement eine Schiene und mindestens einen aus einem elastischen Material bestehenden Wischkörper umfasst, **dadurch gekennzeichnet**, dass die Schiene (15) in den Wischkörper (17) integriert ist.

2. Wischblatt nach Anspruch 1, **dadurch gekennzeichnet**, dass die Schiene (15) vollständig vom Wischkörper (17) umschlossen ist.

3. Wischblatt nach einem der vorhergehenden Ansprüche, **dadurch gekennzeichnet**, dass der Wischkörper (17) aus Gummi besteht.

4. Wischblatt nach einem der vorhergehenden Ansprüche, **dadurch gekennzeichnet**, dass die Schiene (15) aus Metall, vorzugsweise aus Federstahl, besteht.

5. Wischblatt nach einem der vorhergehenden Ansprüche, **dadurch gekennzeichnet**, dass die Schiene (15) durch Ablängen von Bandmaterial herstellbar ist.

6. Wischblatt nach einem der vorhergehenden Ansprüche, **dadurch gekennzeichnet**, dass die Schiene (15) durch Stanzen herstellbar ist.

7. Wischblatt nach einem der vorhergehenden Ansprüche, **dadurch gekennzeichnet**, dass die Schiene (15) einen rechteckförmigen Querschnitt aufweist.

8. Wischblatt nach einem der vorhergehenden Ansprüche, **dadurch gekennzeichnet**, dass der Wischkörper (17) durch Extrudieren herstellbar ist.

9. Verfahren zum Verbinden einer Schiene und mindestens eines Wischkörpers miteinander zu einem Wischelement für ein Wischblatt, **dadurch gekennzeichnet**, dass die Festigkeitseigenschaften des Wischkörpermaterials durch Erwärmen soweit verringert werden, dass die Schiene in den Wischkörper integrierbar ist.

10. Verfahren nach Anspruch 9, **dadurch gekennzeichnet**, dass die Schiene während der Herstellung des Wischkörpers in diesen eingebracht wird.

11. Verfahren nach einem der vorhergehenden Ansprüche 9 oder 10, **dadurch gekennzeichnet**, dass der Wischkörper durch Extrudieren hergestellt wird und dass die Schiene durch eine formgebende Extrudierdüse geführt wird, durch die auch das Wischkörpermaterial hindurchgedrückt wird.

12. Verfahren nach einem der vorhergehenden Ansprüche 9 bis 11, **dadurch gekennzeichnet**, dass die Schiene durch Ablängen von Bandmaterial hergestellt wird, wobei das Ablängen während des Einführens des Bandmaterials in die Extrudierdüse stattfindet.
